# EUROPEAN PATENT APPLICATION

(11) **EP 1 653 231 A1**
(43) Date of publication of application: **03.05.2006**
(21) Application number: 04748257.5
(22) Date of filing: 30.07.2004
(51) Int. Cl.: G01N 30/84, G01N 30/64, G01N 27/416

(54) **MEASURING APPARATUS FOR ULCERATIVE COLITIS DIAGNOSIS/PROGNOSTIC TEST AND METHOD OF MEASURING**

(30) Priority: 30.07.2003 JP 2003282809
(71) Applicant: MATSUSHITA ELECTRIC INDUSTRIAL CO., LTD., Kadoma-shi, Osaka 571-8501 (JP); Tokyo University of Pharmacy and Life Science, Tokyo 192-0392 (JP)
(72) Inventor: NISHIDA, Takeshi, Matsushita Elect.Ind.Co.,Ltd,, Chuo-ku, Osaka-shi, Osaka 540-6319 (JP); HASHIMOTO, Hideaki Matsushita Elect.Ind.Co.,Ltd,, Chuo-ku, Osaka-shi, Osaka 540-6319 (JP); KUSU, Fumiyo, Hachioji-shi, Tokyo 1920364 (JP); HAKAMATA, Hideki, Hachioji-shi, Tokyo 1930833 (JP); KOTANI, Akira, Hachioji-shi, Tokyo 1920913 (JP); TAKAHASHI, Kouji, Tama-shi, Tokyo 2060001 (JP)
(74) Representative: Pautex Schneider, Nicole Véronique
(86) International application number: PCT/JP2004/011278
(87) International publication number: WO 2005/012898

(57) **Abstract**

A measurement apparatus for ulcerative colitis diagnosis and prognostic test according to the present invention comprises a solution mixing unit (15) for mixing an eluent and a quinone solution, the eluent being supplied from a system including a tank (9) in which the eluent used for acid separation is stored, a pump (12) for sending the eluent, a sample injection unit (13) for injecting a sample into the eluent, and an acid separation column (14) for separating short-chain fatty acids included in the sample that is injected from the sample injection unit (13), and the quinone solution being supplied from a system including a tank (8) in which the quinone solution containing quinone and supporting electrolyte is stored, and a pump (11) for sending the quinone solution; and an acid degree measurement unit (16) for measuring the acid degrees of the short-chain fatty acids separated from the sample.

In the measurement apparatus for ulcerative colitis diagnosis and prognostic test which is constructed as described above, it is possible to perform ulcerative colitis diagnosis speedily, easily, and accurately, without performing blood test.

## Description

### TECHNICAL FIELD

The present invention relates to measuring apparatus and method for ulcerative colitis diagnosis and prognostic test, in which long-chain fatty acids included in stool are individually separated and each long-chain fatty acid is measured by an electrochemical method, in order to discover ulcerative colitis and appropriately perform drug-based treatment.

### BACKGROUND ART

Ulcerative colitis is a kind of inflammatory bowel disease which is described as follows: "Ulcerative colitis is an idiopathic and nonspecific inflammatory disease of large intestine, especially rectum, which affects mostly mucous membrane and submucosal layer. Ulcerative colitis affects mostly adults under 30 years old, but it can be found in children and people over 50 years old. Ulcerative colitis has no known cause, and involvement of immunopathological mechanism and psychological factor are considered. Usually, a patient of ulcerative colitis shows bloody diarrheic stool and various extents of systemic symptoms. If ulcerative colitis affects the whole large intestine over a long period of time, it tends to become malignant." An erosion that is shallow defect of cells over mucous membrane or a ulcer that is deep defect of cells is developed in the large intestine, producing symptoms such as diarrhea, bloody stool, abdominal pain, and fever. This disease is, although it is benign, an intractable disease of unknown cause by which QOL of a patient is significantly damaged, and a risk of canceration is high in prolonged cases. In our country, ulcerative colitis cases have steadily increased with westernization of lifestyle. The number of patients in Japan who apply for recognition of this disease is about 60,600 in terms of the number of medical care certificates for specified diseases at the end of 1999, and recently, about 4000 people per year develop this disease, showing a continuous increase in the number of patients. From a global perspective, there are many patients mainly in European countries and the United States, and particularly, there are many in Caucasians and Jews in North Europe and the United States. Further, this disease has a characteristic in that 80~90% of patients repeat recurrences many times, despite that various treatments are conducted.

Diagnosis of ulcerative colitis is comprehensively made from such as radiographic finding, endoscopic finding, or biopsy tissue finding, except for infectious colitis such as bacillary dysentery, amebic dysentery, schistosomiasis japonicum, or colon tuberculosis, radiation enteritis, ischemic colitis, and granulomatous colitis. As a detection method at an early stage, detection of blood in stool, which is the most common symptom of ulcerative colitis, has generally been conducted in mass examination or the like. In a conventional method for detecting ulcerative colitis or the like by checking blood in stool, hemoglobin in occult blood component in stool is collected using a stool sampling tool, and the occult blood component is checked using an anti-hemoglobin antibody by an immunological measurement method. Although this inspection method is convenient, since the hemoglobin in the stool should be stored for long hours, the hemoglobin is decomposed during the storage, and thereby the hemoglobin cannot be accurately measured. In order to suppress the decomposition of hemoglobin, a method of adding penicillin or non-penicillin antibiotic is disclosed in Japanese Published Patent Application Hei.7-72154. However, the above-mentioned inspection method takes long time for measurement. Further, since bloody stool can be caused by not only ulcerative colitis but also chronic diseases such as hemorrhoid, even when existence of hemoglobin in stool is detected, it was impossible to distinguish as to whether it is bleeding due to hemorrhoid or bleeding due to ulcerative colitis or the like, which in turn results in low accuracy of the measurement result. Accordingly, new inspection methods for ulcerative colitis, which are different from the immunological measurement method, are desired.

By the way, with respect to ulcerative colitis, relations between bacteria in patient's stool and short-chain fatty acids as metabolites of these bacteria are reported in "Journal of Japanese Society of Gastroenterology, written by Masaki Nakamura, Japanese Society of Gastroenterology, August 1989, Vol.86, No.8, p.1627-1637". In this literature, it is reported that the number of bacteria in stool of a patient of ulcerative colitis is lower than that of a healthy person. Particularly, it is reported that the number of aerobic bacteria increases when the number of anaerobic bacteria decreases, and consequently, in comparison with a healthy person, the concentration of short-chain fatty acids as metabolites of carbohydrate due to intestinal bacteria decreases in proportion to the number of bacteria in stool, and the concentration of lactic acid as a nonvolatile short-chain fatty acid becomes higher than the total sum of the concentrations of acetic acid, propionic acid, valeric acid, and isovaleric acid which are volatile short-chain fatty acids. Further, it is reported that the concentration of lactic acid increases as the pathological change extends as well as the disease is in its active period rather than its regression period.

Based on such insight, it is understood that, since a healthy person has less lactic acid relative to volatile short-chain fatty acids, the ratio of lactic acid concentration to volatile short-chain fatty acid concentration takes a small value, while, since stool of a patient of ulcerative colitis has less short-chain fatty acids relative to lactic acid, the ratio of lactic acid concentration to volatile short-chain fatty acid concentration takes a relatively large value. Accordingly, if the ratio of lactic acid to volatile short-chain fatty acids can be accurately measured, it is possible to obtain a ulcerative colitis measurement apparatus which is completely different from those described in the above-mentioned prior arts.

In order to realize such ulcerative colitis measurement apparatus, it is necessary to accurately measure the nonvolatile lactic acid concentration and the volatile short-chain fatty acid concentration. A detection method according to fluorescent derivatization of short-chain fatty acids has been known as a conventional short-chain fatty acid measurement method. In this method, after short-chain fatty acids are extracted from stool into a solution, 9-Anthryldiazomethane (ADAM reagent) and carboxyl groups in the short-chain fatty acids are ester-bonded to fluorescent-derivatize the short-chain fatty acids, and then the resultants are separated by high-speed liquid chromatography to perform fluorescent detection.

However, when the concentration of short-chain fatty acids is measured by the above-mentioned fluorescent method, there is a drawback that about two hours are required for preparation before measurement, that is, for derivatization of a fluorescent substance to the short-chain fatty acids. Further, a measurement apparatus utilizing this method has a large RSD (Relative Standard Deviation) in a measured value, which is an indicator of accuracy of the measurement apparatus, and therefore, highly accurate measurement cannot be carried out.

Further, in contrast to the above-mentioned fluorescent method, as a method for measuring the acid degrees of organic acids such as fatty acids easily in a short time, a measurement method utilizing amperometry is proposed in "Determination of the Free Fatty Acid Content in Fats and Oils by Flow Injection Analysis with Electrochemical Detection, written by Kiyoko Takamura and Fumiyo Kusumoki, ANALYTICAL SCIENCES, December 1995, Vol.11, No.6, p.979-981." In this method, a working electrode, a counter electrode, and a reference electrode are provided in a solution sending system which flows, at a constant flow rate, a coexistence electrolysis solution which is obtained by inputting support electrolyte and quinone such as vitamin K₃ in an organic solvent, and a voltage is applied between the working electrode and the counter electrode so that the working electrode shows a constant voltage with respect to the reference electrode and, a predetermined amount of a measurement sample containing an organic acid is injected into this state to obtain a current value in proportion to the acid degree in the measurement sample.

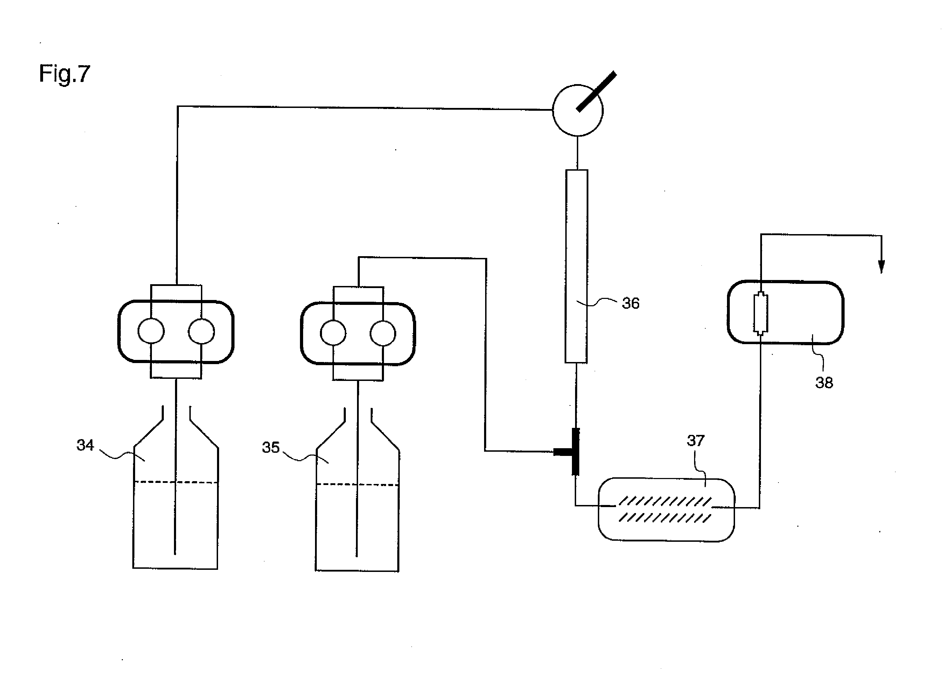

It is thought that the concentrations of short-chain fatty acids can be measured by combining the method of measuring short-chain fatty acids by amperometry and the method of separating into the respective short-chain fatty acids using an acid separation column in such as a high-speed liquid chromatography, and utilizing general post-column derivatization similarly as in the above-mentioned fluorescent method. Figure 7 is a diagram illustrating a device for performing post-column derivatization of the conventional high-speed liquid chromatography. In figure 7, reference numeral 34 denotes a mobile phase, 35 denotes a derivatization sample, 36 denotes a separation column, 37 denotes a mixing device, and 38 denotes a ultraviolet-visible absorption detector. When performing post-column derivatization by the device shown in figure 7, it is necessary to react the mobile phase 34 with the derivatization sample 35 after sufficiently mixing the mobile phase 34 and the derivatization sample 35 by the mixing device 37. Therefore, it is necessary to provide a reaction coil in the rear stage of the mixing device 37. Although reaction coils have different characteristics depending on the types of derivatization reactions, when using a usual high-speed liquid chromatography separation system, a stainless or Teflon (TM) tube having an inner diameter of about 0.5~0.8mm is used. In order to minimize peak diffusion, it is desirable to mix a column eluate and a reaction solution at a ratio of 1:1. Further, the length of the reaction coil should not be increased beyond necessity.

However, in the amperometric measurement method utilizing the general post column derivatization method of the conventional high-speed liquid chromatography, even when all kinds of efforts are made to speedily react the mobile phase 34 and the derivatization sample 35 by the reaction coil without variations, a measured peak is undesirably broadened, and a desired sensitivity cannot be obtained.

The present invention is made to solve the above-mentioned problems and has for its object to provide a measuring apparatus and method for ulcerative colitis diagnosis and prognostic test, for determining tumorous colitis speedily, easily and accurately by measuring the concentrations of short-chain fatty acids in stool without performing blood test.

### DISCLOSURE OF THE INVENTION

A measurement apparatus for ulcerative colitis diagnosis and prognostic test defined in Claim 1 of the present invention comprises: a solution mixing unit for mixing an eluent and a quinone solution, the eluent being supplied from a separation system including an eluent tank in which the eluent used for acid separation is stored, at least one pump for sending the eluent, a sample injection unit for injecting a sample into the eluent, and an acid separation column for separating short-chain fatty acids included in the sample that is injected from the sample injection unit, and the quinone solution being supplied from a solution sending system including a solution tank in which the quinone solution containing quinone and supporting electrolyte is stored, and at least one pump for sending the quinone solution; and an acid degree measurement unit for measuring the acid degrees of the short-chain fatty acids included in a mixture solution that flows from the solution mixing unit; wherein the acid degree measurement unit continuously measures the acid degrees of the short-chain fatty acids included in the sample, which are successively mixed into the quinone solution by the solution mixing unit.

Therefore, various kinds of short-chain fatty acids included in stool can be accurately measured in a short time by a simple operation, and furthermore, automation of the measurement apparatus for ulcerative colitis diagnosis and prognostic test is realized.

According to Claim 2 of the present invention, in the measurement apparatus for ulcerative colitis diagnosis and prognostic test defined in Claim 1, the solution mixing unit includes a main tube in which the quinone solution flows, and a side tube in which the eluent flows, and the side tube penetrates into the main tube so that an aperture plane of a front end thereof is parallel to an inner diameter plane of the main tube.

Therefore, the sample that flows in the side tube can be diffused evenly into the quinone solution that flows in the main tube, whereby measurement accuracy is improved.

According to Claim 3 of the present invention, in the measurement apparatus for ulcerative colitis diagnosis and prognostic test defined in Claim 2, in the solution mixing unit, a cross-section area of the front end of the side tube is 1/3 or lower relative to an inner cross-section area of the main tube.

Therefore, the sample that flows in the side tube can be diffused evenly into the quinone solution that flows in the main tube, whereby measurement accuracy is improved.

According to Claim 4 of the present invention, the measurement apparatus for ulcerative colitis diagnosis and prognostic test defined in any of Claims 1 to 3, comprising: the acid degree measurement unit including a working electrode in which electrochemical reaction of the quinone proceeds, a reference electrode serves as a basis for a voltage control of the working electrode, and a counter electrode that makes a pair with the working electrode to flow a current; and measuring a current of the quinone that flows through the working electrode in a state where a voltage is applied to the working electrode so that it has a constant voltage over the reference electrode.

Therefore, accurate measurement using amperometry can be carried out.

According to Claim 5 of the present invention, in the measurement apparatus for ulcerative colitis diagnosis and prognostic test defined in any of Claims 1 to 4, the acid separation column is an ion exclusion type column for separating a target sample by a difference in electrostatic repulsive forces of ions having the same charge as an ion-exchange group.

Therefore, separation of various short-chain fatty acids in the sample can be easily carried out.

According to Claim 6 of the present invention, in the measurement apparatus for ulcerative colitis diagnosis and prognostic test defined in any of Claims 1 to 5, a degasser for removing bubbles and dissolved oxygen included in the quinone solution and the eluent is provided in a flow path from the eluent tank and a flow path from the solution tank, respectively.

Therefore, dissolved oxygen and bubbles which are included in the quinone solution and cause noise can be removed, whereby measurement accuracy is improved.

According to Claim 7 of the present invention, in the measurement apparatus for ulcerative colitis diagnosis and prognostic test defined in any of Claims 1 to 6, the flow rate of the eluent to the acid separation column is 7.96mm/min~ 60.2mm/min.

Therefore, various kinds of short-chain fatty acids can be efficiently separated.

According to Claim 8 of the present invention, in the measurement apparatus for ulcerative colitis diagnosis and prognostic test defined in any of Claims 1 to 7, the flow rate of the quinone solution is 891mm/min~5102mm/min.

Therefore, the acid degree in the sample can be accurately measured.

According to Claim 9 of the present invention, in the measurement apparatus for ulcerative colitis diagnosis and prognostic test defined in any of Claims 1 to 8, the eluent is a water solution containing 0.1mM of perchloric acid.

Therefore, various kinds of short-chain fatty acids in the sample can be separated.

According to Claim 10 of the present invention, in the measurement apparatus for ulcerative colitis diagnosis and prognostic test as defined in any of Claims 1 to 9, the quinone solution is an ethanol solution containing 3mM~ 6mM of quinone and 50mM~150mM of lithium perchlorate.

Therefore, the acid degree in the sample can be accurately measured.

According to Claim 11 of the present invention, in the measurement apparatus for ulcerative colitis diagnosis and prognostic test defined in any of Claims 1 to 10, the sample is human stool containing six kinds of short-chain fatty acids which are lactic acid, acetic acid, propionic acid, butyric acid, isovaleric acid, and valeric acid.

Therefore, the ratio between the lactic acid and the total sum of the acetic acid, propionic acid, butyric acid, isovaleric acid, and valeric acid which are volatile acids can be easily obtained.

According to Claim 12 of the present invention, in the measurement apparatus for ulcerative colitis diagnosis and prognostic test defined in any of Claims 1 to 11, the acid degree measurement unit enables measurement up to an acid measurement sensitivity of 5µM~2mM.

Therefore, the acid degrees of short-chain fatty acids can be measured within a broad range.

According to Claim 13 of the present invention, in the measurement apparatus for ulcerative colitis diagnosis and prognostic test defined in any of Claims 1 to 12, the length of a flow path provided between the solution mixing unit and the acid degree measurement unit is 20mm~80mm.

Therefore, measurement in which no noise occurs and a peak is not broadened can be carried out.

A measurement method for ulcerative colitis diagnosis and prognostic test defined in Claim 14 of the present invention comprises: an acid separation step of injecting a measurement sample into an eluent that flows into an acid separation column at a constant flow rate, and separating short-chain fatty acids included in the measurement sample by the acid separation column; a solution mixing step of mixing the eluent that is sent from the acid separation column into a quinone solution that contains quinone and supporting electrolyte and is sent at a constant flow rate; and an acid degree measurement step of continuously measuring the acid degrees of the short-chain fatty acids in the mixture resultant which is produced by the measurement sample, being successively mixed into the quinone solution in the liquid mixing step.

Therefore, in contrast to the conventional method, various kinds of short-chain fatty acids in stool can be measured without preprocessing, whereby accurate measurement is carried out in a short time.

According to Claim 15 of the present invention, in the measurement method for ulcerative colitis diagnosis and prognostic test defined in Claim 14, the solution mixing step comprises: forming a flow path by mixing a flow in a side tube which comprises the eluent flow, into a flow in a main tube which comprises the quinone solution flow; and discharging the eluent that flows from the side tube in parallel to the quinone solution that flows in the main tube, thereby to evenly diffuse the eluent into the quinone solution.

Therefore, the sample in the side tube can be evenly diffused into the quinone solution in the main tube.

### BRIEF DESCRIPTION OF THE DRAWINGS

Figure 1 is an external view of a measurement apparatus for ulcerative colitis diagnosis and prognostic test according to a first embodiment of the present invention.
Figure 2 is a schematic view of the measurement apparatus for ulcerative colitis diagnosis and prognostic test according to the first embodiment of the present invention.
Figure 3 is a cross-sectional view of a solution mixing part of the measurement apparatus for ulcerative colitis diagnosis and prognostic test according to the first embodiment of the present invention.
Figure 4 is a detail view of electrodes of an acid degree measurement unit of the measurement apparatus for ulcerative colitis diagnosis and prognostic test according to the first embodiment of the present invention.
Figure 5(a) is an exploded view of a tool for collecting a sample, of the measurement apparatus for ulcerative colitis diagnosis and prognostic test according to the first embodiment of the present invention.
Figure 5(b) is an assembly cross-sectional view of the tool for collecting a sample, of the measurement apparatus for ulcerative colitis diagnosis and prognostic test according to the first embodiment of the present invention.
Figure 6 is a correlation diagram between storage time passing from injecting a sample, and reduction current, in a case where the amounts of short-chain fatty acids in stool are measured by the acid degree measurement unit of the measurement apparatus for ulcerative colitis diagnosis and prognostic test according to the first embodiment of the present invention.
Figure 7 is a diagram illustrating an apparatus for performing a post-column derivatization method of a conventional high-speed liquid chromatography.

### BEST MODE TO EXECUTE THE INVENTION

Hereinafter, embodiments of the present invention will be described with reference to the drawings. The embodiments described hereinafter are merely examples, and the present invention is not necessarily restricted to the embodiments.

### EMBODIMENT 1

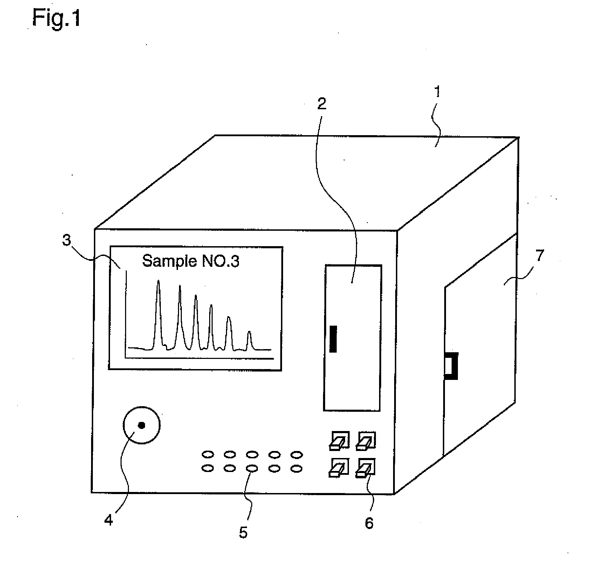

Figure 1 an external view of a measurement apparatus for ulcerative colitis diagnosis and prognostic test according to a first embodiment of the present invention.

With reference to figure 1, reference numeral 1 denotes a case containing the measurement apparatus for ulcerative colitis diagnosis and prognostic test according to the first embodiment of the present invention, numeral 2 denotes a door for replacing a separation column, numeral 3 denotes a display for displaying measurement process and result, numeral 4 denotes a sample injection part for injecting a measurement sample, numeral 5 denotes operation buttons for performing various kinds of operations, numeral 6 denotes toggle switches, and numeral 7 denotes a disposal door for discarding waste fluid that is collected during measurement.

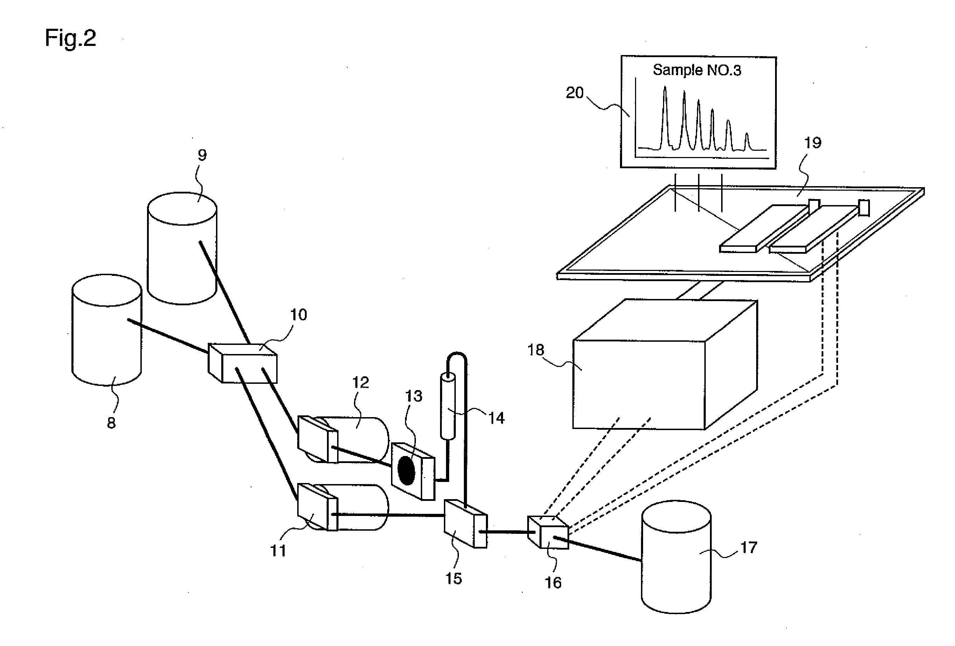

Figure 2 is a schematic diagram illustrating the construction of the measurement apparatus for ulcerative colitis diagnosis and prognostic test according to the first embodiment of the present invention.

With reference to figure 2, reference numeral 8 denotes a solution tank in which an electrolysis solution used for electrochemical acid degree measurement is stored. The electrolysis solution contains ethanol as a solvent, lithium perchlorate as a supporting electrolyte, and vitamin K₃ (hereinafter referred to as VK₃) as quinone. When the concentration of lithium perchlorate is low, the resistance of quinone solution increases and variation in a charging current which causes noise increases. On the other hand, when the concentration of lithium perchlorate is high, salt deposition occurs undesirably. Therefore, the concentration of lithium perchlorate is desirably 50mM~150mM. Further, in the present invention, since an acid degree measurement unit 16 described later measures a minute quantity of acid relative to the concentration of quinone, the concentration of quinone should be sufficiently higher than the concentration of acid to be measured, within a dissolvable range in relation to the solvent. Therefore, when ethanol is used as a solvent, the concentration of quinone is desirably 3mM~6mM. In this first embodiment, the concentration of quinone is 3mM. The solvent is not restricted to ethanol, and any of methanol, propanol, and a mixture of two or three solvents selected from methanol, ethanol, and propanol may be used. The supporting electrolyte is not restricted to lithium perchlorate, and any of lithium chloride, sodium chloride, potassium chloride, tetramethylammonium perchlorate, and tetraethylammonium perchlorate may be used. Further, the quinone is not restricted to VK₃, and any of 3,5-di-t-butyl-1,2-benzoquinone (DBBQ) and tetrabromo-1,2-benzoquinone may be used.

Reference numeral 9 denotes an eluent tank in which an eluent used for acid separation is stored. As the eluent, a perchloric acid solution having a concentration of 0.1mM is used. When the concentration of perchloric acid as the eluent is increased to, for example, about 1mM, the base line current in the acid degree measurement unit 16 described later increases, and much noise is superimposed on the measurement result. Further, when the concentration of perchloric acid is, for example, as extremely low as 0.01mM, the short-chain fatty acid does not liquate out of the acid separation column, and it does not appear as a peak. Therefore, the concentration of perchloric acid is desirably 0.07mM~0.3mM. In this first embodiment, an ion exclusion column is employed as the acid separation column 14 as described later, and the eluent to be used may be phosphoric acid, hydrochloric acid, or benzenesulfonic acid, besides the above-mentioned perchloric acid solution. Further, when a reverse-phase column is used as the acid seperation column, a mixture of water and 2~4 eluents selected from methanol, ethanol, acetonitrile, and propanol is suitable. When an ion exchange column is used, a perchloric acid solution, phosphoric acid, hydrochloric acid, or benzenesulfonic acid is suitable.

Reference numeral 10 denotes a degasser for removing the electrolysis solution, and babbles and dissolved oxygen in the eluent. Reference numeral 11 denotes a pump A for sending the quinone solution, which supplies the quinone solution at a flow rate of 1ml/min to a mixing unit 15. The flow rate of the quinone solution is 891mm/min~5102mm/min. The reason is as follows. When the flow rate of the quinone solution in the acid degree measurement unit 16 is lower than the above-mentioned flow rate, the separated acid is diffused, whereby the peak is broadened during acid degree measurement, resulting in a measurement error. On the other hand, when the flow rate of the quinone solution is higher than the above-mentioned flow rate, the speed of reduction reaction in an electrode 24 is not sufficient, whereby the response of electrode reaction is degraded, resulting in a measurement error.

Reference numeral 12 denotes a pump B for sending the eluent, which supplies the eluent at a flow rate of 0.6ml/min to the solution mixing unit 15. The flow rate of the eluent to the acid separation column is 7.96mm/min~60.2mm/min. The reason is as follows. When the flow rate of the eluent to the acid separation column 14 is lower than the above-mentioned flow rate, not only that the measurement time increases, but the separated acid undesirably diffuses, whereby the peak is broadened during the acid degree measurement, resulting in a measurement error. On the other than, when the flow rate of the eluent is higher than the above-mentioned flow rate, the acid cannot be separated. As for the pump A 11 and the pump B 12, it is desired to use a pump which is defined in "JIS K0124 high-speed liquid chromatographic analysis general rule 4.2 separation part (2) pump".

Reference numeral 13 denotes a sample injection unit for injecting a sample into the eluent. Reference numeral 14 denotes an acid separation column for separating short-chain fatty acid in the sample that is injected by the sample injection unit 13. This first embodiment employs, as the acid separation column 14, an ion exclusion column (manufactured by Shimazu, shim-pack SPR-H (250mm×7.8mm i.d.)) for separating a target sample by a difference in electrostatic repulsive forces of ions (common ions) having the same charge as that of an ion exchange group. It is also possible to use, as the acid separation column 14, a reverse-phase column such as an ODS for separating a target sample by a difference in distribution equilibriums between two phases (mobile phase and stationary phase) of a sample, or an ion exchange column for separating a target sample by a difference in electrostatic affinities of ions (counter ions) having a charge reverse to that of the ion exchange group, besides the ion exclusion column. However, in order to increase the measurement accuracy, it is desirable to use the ion exclusion column.

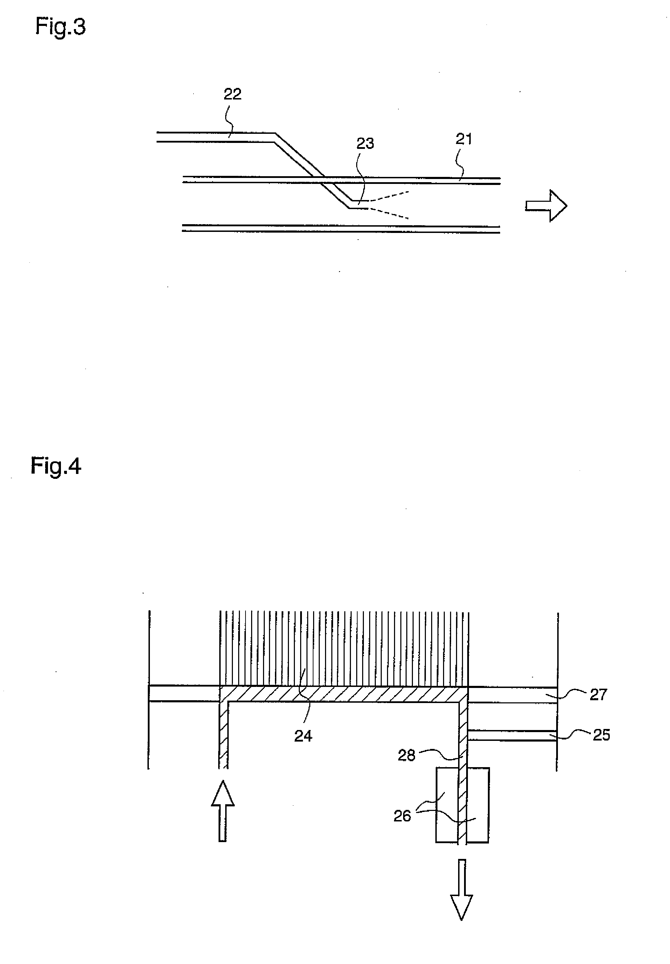

Reference numeral 15 denotes a solution mixing unit for mixing the eluent that outflows from the acid separation column 14 and the quinone solution that is sent by the pump B 12, and the specific construction thereof will be described with reference to figure 3. Figure 3 is a cross-sectional view of the solution mixing unit 15.

In figure 3, reference numeral 21 denotes a main tube in which the quinone solution flows, numeral 22 denotes a side tube in which the eluent including the separated short-chain fatty acids flows, and 23 denotes a front end of the side tube 22. As shown in figure 3, in the solution mixing unit 15, the side tube 22 penetrates a portion of the main tube 21 to insert the front end 23 thereof in the main tube 21, and further, the side tube front end 23 is positioned in the center of the main tube 21. At this time, the side tube front end 23 should be parallel to the quinone solution flowing direction in the main tube 21, and the aperture plane of the side tube front end 23 should be parallel to the inner diameter plane of the main tube 21. Thereby, a flow path is formed by mixing the flow of the eluent in the side tube 21 with the flow of the quinone solution in the main tube 21, and the eluent that flows in the side tube 22 is discharged in parallel to the flow of the quinone solution in the main tube 21. In this first embodiment, although the side tube 22 is designed so that the area of the aperture plane of the side tube front end 23 is 1/3 of the inner cross-section area of the main tube 21, the relationship between the radius of the side tube front end 23 and the inner cross-section area of the main tube 21 is not restricted to the above-mentioned value, and any relationship may be taken so long as the side tube 22 can enter in the main tube 21.

Although the short-chain fatty acids that are mixed into the quinone solution by the solution mixing unit 15 are sent to the acid degree measurement unit 16 described later, since mixing of the eluent including the separated short-chain fatty acids and the quinone solution is also carried out in the flow path between the solution mixing unit 15 and the acid degree measurement unit 16, sufficient mixing is not carried out if the distance between the solution mixing unit 15 and the acid degree measurement unit 16 is short, resulting in a low peak. On the other hand, when the distance between the solution mixing unit 15 and the acid degree measurement unit 16 is long, the acids diffuse and thereby the peak width of the short-chain fatty acids broadens, resulting in a reduction in the peak height. Therefore, in order to obtain a most favorable peak height, the length of the flow path between the solution mixing unit 15 and the acid degree measurement unit 16 is desirably 40~60cm. Since a favorable peak height can be obtained when the flow path between the solution mixing unit 15 and the acid degree measurement unit 16 is 20~80cm, it is possible to change the length between the solution mixing unit 15 and the acid degree measurement unit 16 according to the design of the apparatus.

Reference numeral 16 denotes an acid degree measurement unit for measuring the acid degrees of the separated short-chain fatty acids, and the specific construction thereof will be described using figure 4. Figure 4 is a detail view of electrodes of the acid degree measurement unit of the measurement apparatus for ulcerative colitis diagnosis and prognostic test according to the first embodiment of the invention.

In figure 4, reference numeral 24 denotes a working electrode in which an electrochemical reaction of quinone in the quinone solution proceeds, and it is implemented by a glassy carbon. Reference numeral 25 denotes a reference electrode to be a standard of voltage control for the working electrode, and it is implemented by a standard calomel electrode (hereinafter referred to as SCE). Reference numeral 26 denotes a counter electrode which is paired with the working electrode and flows a current. The counter electrode 26 is provided so as to surround the flow path, and stainless is used as a material thereof. Reference numeral 27 denotes a spacer for securing a path for the quinone solution, and numeral 28 denotes an electrolysis solution flowing through the electrodes. In the acid degree measurement unit 16, a voltage is applied using a voltage control device (potentiostat) so that the voltage at the working electrode 24 becomes constant with respect to the reference electrode 25, and a quinone current that flows into the working electrode 24 is measured.

Reference numeral 17 denotes a waste fluid bath in which the quinone solution and the eluent after measurement are stored, numeral 18 denotes a power supply box for supplying a power to this apparatus, numeral 19 denotes a control substrate for controlling this apparatus, and numeral 20 denotes a display for displaying reduction current values to the acid degrees of various short-chain fatty acids.

Hereinafter, a description will be given of the operation of the measurement apparatus for ulcerative colitis diagnosis and prognostic test, which is constituted as described above.

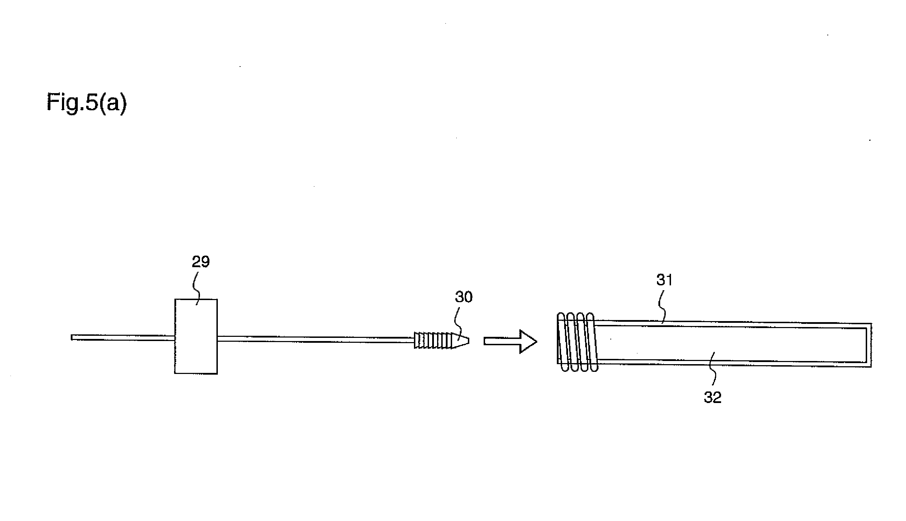

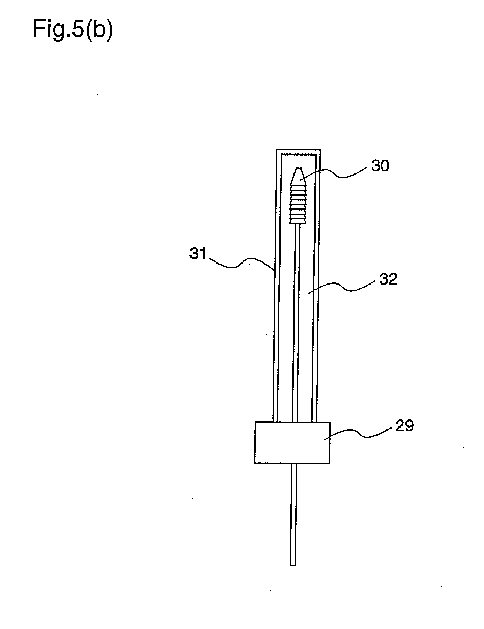

Initially, in order to prepare a measurement sample, stool is sampled using a stool sampling tool 29 shown in figures 5(a) and 5(b). Figure 5(a) is an exploded view of the stool sampling tool 29, and figure 5(b) is an assembly cross-sectional view of the stool sampling tool 29. Stool is sampled using a jagged portion 30 at the front end of the stool sampling tool 29, and stored in a sample container 31 filled with a sterile water that is a solution of 3% phenol in water, as shown in figure 5(b). Short-chain fatty acids are extracted from the stool into the sterile water during storage, and solids are filtered by a membrane filter or the like from the sterile water 32 into which the short-chain fatty acids are extracted. The amount of the stool and the amount of the sterile water 32 should be controlled so that the concentration of the short-chain fatty acid in the filtered sterile water 32 becomes 0.005mM~2mM.

Next, the measurement apparatus for ulcerative colitis diagnosis and prognostic test is started. The eluent is sent from the eluent tank 9 through the degasser 10 to the acid separation column 14 at a flow rate of 0.6ml/min by the pump B 12, and passes the acid separation column 14 to reach the solution mixing unit 15. Further, the quinone solution is supplied from the solution tank 8 through the degasser 10 to the solution mixing unit 15 at a flow rate of 1ml/min by the pump A 11.

Next, 20µL of sample is taken out of the sterile water 32 and injected into the sample injection unit 13. The short-chain fatty acids contained in the sample are mixed into the eluent and conveyed to the acid separation column 14.

In the acid separation column 14, the plural short-chain fatty acids included in the sample are separated, and the separated short-chain fatty acids are successively sent to the solution mixing unit 16.

In the solution mixing unit 15, as described above, the front end 23 of the side tube 22 is positioned in the center of the main tube 21, and the aperture plane of the side tube front end 23 is parallel to the inner diameter plane of the main tube. Therefore, the pressure at the outlet of the side tube front end 23 is lowered by the flow of the electrolysis solution in the main tube 21, whereby the pressure of the eluent passing in the side tube 22 is released at the outlet of the side tube 22, and the eluent is mixed into the quinone solution while diffusing in the form of a mist, as shown in figure 3.

The short-chain fatty acids mixed into the solution by the solution mixing unit 15 are further mixed into the quinone solution in the flow path provided between the solution mixing unit 15 and the acid degree measurement unit 16 to be sent to the acid degree measurement unit 16.

The mixture solution sent to the acid degree measurement unit 16 flows in the flow path formed by the spacer 27 along the arrow direction, as shown in figure 4. Since a voltage is applied between the working electrode 24 and the counter electrode 26 so that the voltage at the working electrode 24 becomes -0.53V with respect to the reference electrode 25, when the quinone solution containing the short-chain fatty acids separated from the sample passes through the acid degree measurement unit 16, a current in proportion to the acid degree of the short-chain fatty acids is obtained. Sine the quinone solution containing the short-chain fatty acids is supplied through the solution mixing unit 15 to the acid degree measurement unit 16 every time the short-chain fatty acids are separated from the acid separation column, the acid degree measurement unit 16 continuously detects the currents in proportion to the acid degrees of the short-chain fatty acids included in the sample.

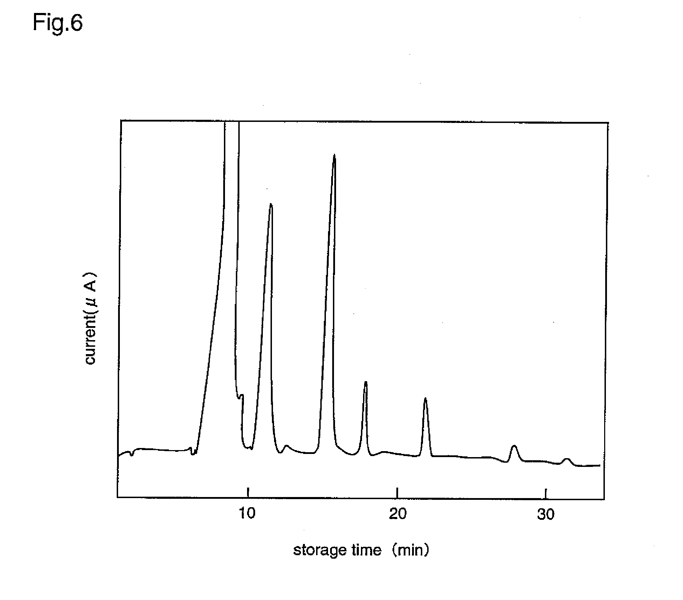

Figure 6 is a correlation diagram between storage time from injection of the sample and reduction current, in the case where the amounts of short-chain fatty acids in stool are measured by the acid degree measurement unit 16 of the measurement apparatus for ulcerative colitis diagnosis and prognostic test according to the first embodiment. In figure 6, the abscissa shows the storage time from when the sample is injected, and the ordinate shows the reduction current value of VK₃ measured by the acid degree measurement unit. A standard solution containing lactic acid, acetic acid, propionic acid, butyric acid, isovaleric acid, and valeric acid is previously produced, and the solution is measured by the measurement apparatus for ulcerative colitis diagnosis and prognostic test according to the first embodiment to previously check the peak occurrence positions of the respective short-chain fatty acids according to the storage time, whereby the respective short-chain fatty acids included in the measurement sample can be specified. When an analytical curve is produced using a standard solution of short-chain fatty acids, a favorable linear relationship is obtained within a range where the sensitivity of the acid degree measurement is 5µM~2mM. In this first embodiment, since the measurement is carried out with the quinone solution having a concentration of 3mM, the detection reaches a limitation when the acid concentration is lower than 5 µM, and the peak reaches a ceiling when the concentration is higher than 2mM.

As described above, the measurement apparatus for ulcerative colitis diagnosis and prognostic test according to the present invention is provided with a solution mixing unit 15 for mixing an eluent and a quinone solution, the eluent being supplied from a separation system including an eluent tank 9 in which the eluent used for acid separation is stored, at least one pump 12 for sending the eluent, a sample injection unit 13 for injecting a sample into the eluent, and an acid separation column 14 for separating short-chain fatty acids included in the sample that is injected from the sample injection unit 13, and the quinone solution being supplied from a solution sending system including a solution tank 8 in which the quinone solution containing quinone and supporting electrolyte is stored, and at least one pump 11 for sending the quinone solution; and an acid degree measurement unit 16 for measuring the acid degrees of the short-chain fatty acids separated from the sample. Therefore, the total sum of volatile short-chain fatty acids and the concentration of lactic acid can be easily obtained by injecting the sample obtained from a stored sterile water through the sample injection unit, and a ratio between the concentration of lactic acid and the concentration of volatile short-chain fatty acids can be calculated, whereby ulcerative colitis can be discovered at high accuracy.

Further, since the acid degree measurement unit 16 measures the total sum of the volatile short-chain fatty acids and the concentration of the lactic acid in the sample by the electrochemical measurement method, speedy measurement can be carried out even when the amount of the sample is small.

Furthermore, in the solution mixing unit 15, the side tube 22 in which the eluent flows is inserted into the main tube 21, and the side tube 22 is positioned so that the aperture plane of the front end 23 of the side tube 22 is parallel to the inner diameter plane of the main tube. Therefore, the eluent can be mixed into the quinone solution without occurring a disturbed flow at the surface of the working electrode 24, thereby obtaining a peak waveform that is not broad in the acid degree measurement unit 16. Further, since the noise component is constant when the amounts of the respective short-chain fatty acids are compared, no influence of noise is seen apparently.

### APPLICABILITY IN INDUSTRY

A measurement apparatus and method for ulcerative colitis diagnosis and prognostic test according to the present invention is useful in discovering ulcerative colitis by measuring short-chain fatty acids speedily, easily and accurately without performing blood test, thereby to appropriately perform drug treatment during curing.

## Claims

1. A measurement apparatus for ulcerative colitis diagnosis and prognostic test comprising:
a solution mixing unit for mixing an eluent and a quinone solution, said eluent being supplied from a separation system including an eluent tank in which the eluent used for acid separation is stored, at least one pump for sending the eluent, a sample injection unit for injecting a sample into the eluent, and an acid separation column for separating short-chain fatty acids included in the sample that is injected from the sample injection unit, and said quinone solution being supplied from a solution sending system including a solution tank in which the quinone solution containing quinone and supporting electrolyte is stored, and at least one pump for sending the quinone solution; and
an acid degree measurement unit for measuring the acid degrees of the short-chain fatty acids included in a mixture solution that flows from the solution mixing unit;
wherein said acid degree measurement unit continuously measures the acid degrees of the short-chain fatty acids included in the sample, which are successively mixed into the quinone solution by the solution mixing unit.

2. A measurement apparatus for ulcerative colitis diagnosis and prognostic test as defined in Claim 1, wherein
said solution mixing unit includes a main tube in which the quinone solution flows, and a side tube in which the eluent flows, and
said side tube penetrates into the main tube so that an aperture plane of a front end thereof is parallel to an inner diameter plane of the main tube.

3. A measurement apparatus for ulcerative colitis diagnosis and prognostic test as defined in Claim 2, wherein
in said solution mixing unit, a cross-section area of the front end of the side tube is 1/3 or lower relative to an inner cross-section area of the main tube.

4. A measurement apparatus for ulcerative colitis diagnosis and prognostic test as defined in any of Claims 1 to 3, comprising:
said acid degree measurement unit including
a working electrode in which electrochemical reaction of the quinone proceeds,
a reference electrode serves as a basis for a voltage control of the working electrode, and
a counter electrode that makes a pair with the working electrode to flow a current; and
measuring a current of the quinone that flows through the working electrode in a state where a voltage is applied to the working electrode so that it has a constant voltage over the reference electrode.

5. A measurement apparatus for ulcerative colitis diagnosis and prognostic test as defined in any of Claims 1 to 4, wherein
said acid separation column is an ion exclusion type column for separating a target sample by a difference in electrostatic repulsive forces of ions having the same charge as an ion-exchange group.

6. A measurement apparatus for ulcerative colitis diagnosis and prognostic test as defined in any of Claims 1 to 5, wherein
a degasser for removing bubbles and dissolved oxygen included in the quinone solution and the eluent is provided in a flow path from the eluent tank and a flow path from the solution tank, respectively.

7. A measurement apparatus for ulcerative colitis diagnosis and prognostic test as defined in any of Claims 1 to 6, wherein
the flow rate of the eluent to the acid separation column is 7.96mm/min~60.2mm/min.

8. A measurement apparatus for ulcerative colitis diagnosis and prognostic test as defined in any of Claims 1 to 7, wherein
the flow rate of the quinone solution is 891mm/min~ 5102mm/min.

9. A measurement apparatus for ulcerative colitis diagnosis and prognostic test as defined in any of Claims 1 to 8, wherein
said eluent is a water solution containing 0.1mM of perchloric acid.

10. A measurement apparatus for ulcerative colitis diagnosis and prognostic test as defined in any of Claims 1 to 9, wherein
said quinone solution is an ethanol solution containing 3mM~ 6mM of quinone and 50mM~150mM of lithium perchlorate.

11. A measurement apparatus for ulcerative colitis diagnosis and prognostic test as defined in any of Claims 1 to 10, wherein
said sample is human stool containing six kinds of short-chain fatty acids which are lactic acid, acetic acid, propionic acid, butyric acid, isovaleric acid, and valeric acid.

12. A measurement apparatus for ulcerative colitis diagnosis and prognostic test as defined in any of Claims 1 to 11, wherein
the acid degree measurement unit enables measurement up to an acid measurement sensitivity of 5µM~2mM.

13. A measurement apparatus for ulcerative colitis diagnosis and prognostic test as defined in any of Claims 1 to 12, wherein
the length of a flow path provided between the solution mixing unit and the acid degree measurement unit is 20mm~80mm.

14. A measurement method for ulcerative colitis diagnosis and prognostic test comprising:
an acid separation step of injecting a measurement sample into an eluent that flows into an acid separation column at a constant flow rate, and separating short-chain fatty acids included in the measurement sample by the acid separation column;
a solution mixing step of mixing the eluent that is sent from the acid separation column into a quinone solution that contains quinone and supporting electrolyte and is sent at a constant flow rate; and
an acid degree measurement step of continuously measuring the acid degrees of the short-chain fatty acids in the mixture resultant which is produced by the measurement sample, being successively mixed into the quinone solution in the liquid mixing step.

15. A measurement apparatus for ulcerative colitis diagnosis and prognostic test as defined in Claim 14, wherein
said solution mixing step comprising:
forming a flow path by mixing a flow in a side tube which comprises the eluent flow, into a flow in a main tube which comprises the quinone solution flow; and
discharging the eluent that flows from the side tube in parallel to the quinone solution that flows in the main tube, thereby to evenly diffuse the eluent into the quinone solution.
